# EUROPÄISCHE PATENTSCHRIFT

(11) **EP 4 107 414 B1**
(45) Veröffentlichungstag und Bekanntmachung des Hinweises auf die Patenterteilung: **03.12.2025**
(21) Anmeldenummer: 21704266.2
(22) Anmeldetag: 09.02.2021
(51) Int. Cl.: F04D 29/10, F16J 15/3232, F16J 15/3208, F16J 15/3252, F16J 15/3276

(54) **PUMPE**
PUMP
POMPE

(30) Priorität: 20.02.2020 DE 102020202174
(43) Veröffentlichungstag der Anmeldung: 28.12.2022
(73) Patentinhaber: ElringKlinger AG, 72581 Dettingen (DE); Elringklinger Kunststofftechnik GmbH, 74321 Bietigheim-Bissingen (DE)
(72) Erfinder: KOCH, Uwe, 72124 Pliezhausen (DE); AMET, Sinan, 75447 Sternenfels (DE)
(74) Vertreter: DTS Patent- und Rechtsanwälte PartmbB
(86) Internationale Anmeldenummer: PCT/EP2021/053039
(87) Internationale Veröffentlichungsnummer: WO 2021/165092

(56) Entgegenhaltungen:
- EP-A1- 3 505 799
- EP-A1- 4 013 982
- WO-A1-2016/096516
- CN-A- 105 626 870
- CN-A- 110 617 335
- CN-A- 110 645 357
- CN-U- 208 348 513
- DE-A1- 102011 084 422
- DE-A1- 102018 117 306
- JP-A- 2017 180 639
- US-A1- 2019 226 584

## Beschreibung

Die vorliegende Erfindung betrifft eine Pumpe, insbesondere eine Pumpe für dünnflüssige Medien, beispielsweise eine Wasserpumpe.

Dichtungsanordnungen sind aus der DE 10 2016 205 057 A1 bekannt.

Die WO 2016/096516 A1 beschreibt eine Hochdruckpumpe, die mindestens eine Dichtungsanordnung umfasst.

Die EP 2476934 A1 beschreibt eine Pumpe gemäß dem Oberbegriff des Anspruchs 1.

Der vorliegenden Erfindung liegt die Aufgabe zugrunde, eine Pumpe bereitzustellen, die eine Dichtungsanordnung umfasst, welche möglichst einfach aufgebaut ist und flexibel einsetzbar ist.

Diese Aufgabe wird erfindungsgemäß durch eine Pumpe gemäß Anspruch 1 gelöst.

Die Dichtungsanordnung dient vorzugsweise einer Abdichtung zwischen zwei Aufnahmeräumen zur Aufnahme zweier Medien im Bereich eines beweglichen Bauteils.

Die Dichtungsanordnung umfasst ein ringförmiges radial innenliegendes Dichtelement, welches in einem montierten Zustand zur Abdichtung an dem beweglichen Bauteil anliegt oder anlegbar ist.

Das radial innenliegende Dichtelement ist vorzugsweise ein radial nach innen wirkendes Dichtelement. Insbesondere weist das radial innenliegende Dichtelement eine radiale Dichtwirkung auf.

Das radial innenliegende Dichtelement ist einstückig ausgebildet und umfasst mindestens zwei Dichtlippen.

"Einstückig" bedeutet vorzugsweise, dass das dadurch beschriebene Element ein einzelnes, insbesondere separat handhabbares, Element bildet und einzelne Bestandteile davon nicht trennbar sind, ohne dass das Element dabei zerstört wird. Vorzugsweise sind einzelne Bestandteile des als "einstückig" beschriebenen Elements stoffschlüssig miteinander verbunden.

Erfindungsgemäß ist das radial innenliegende Dichtelement einstückig hergestellt und/oder aus einem Stück hergestellt.

Die mindestens zwei Dichtlippen erstrecken sich von einem Grundkörper des radial innenliegenden Dichtelements bezüglich einer Längsmittelachse des beweglichen Bauteils nach innen.

Vorzugsweise erstrecken sich die mindestens zwei Dichtlippen radial nach innen.

Durch die Ausbildung der mindestens zwei Dichtlippen, welche sich nach innen erstrecken, kann eine optimierte radiale Anpressung der mindestens zwei Dichtlippen an das bewegliche Bauteil ausgebildet werden.

Vorzugsweise werden von Wasserpumpendichtungen zu erfüllende Anforderungen von der Dichtungsanordnung eingehalten und/oder erfüllt.

Gleitringdichtungen sind bei der Dichtungsanordnung vorzugsweise entbehrlich. Da Gleitringdichtungen vergleichsweise hochpreisig und aufwendig herzustellen sind, können so im Vergleich zu Dichtungen mit Gleitringdichtungen Kosten eingespart werden.

Im Vergleich zu Dichtungen mit Gleitringdichtungen kann die Dichtungsanordnung mit geringerem wirtschaftlichen Aufwand und gleichzeitig mit einer geringeren Bauhöhe ausgebildet werden.

Es kann vorgesehen sein, dass die mindestens zwei Dichtlippen sich bezüglich der Längsmittelachse des beweglichen Bauteils schräg radial nach innen erstrecken.

Nachfolgend wird auf eine radiale Richtung und eine axiale Richtung Bezug genommen. Diese Richtungen beziehen sich vorzugsweise auf die Längsmittelachse und/oder Rotationsachse des beweglichen Bauteils und/oder auf eine gemeinsame Achse, insbesondere eine Symmetrieachse, des radial innenliegenden Dichtelements, eines Trägerelements, eines Halteelements und/oder der gesamten Dichtungsanordnung.

Beispielsweise bildet die Dichtungsanordnung eine Radialwellendichtung, insbesondere für eine Pumpe in einem Fahrzeug.

Vorteilhaft kann es sein, wenn eine erste Dichtlippe der mindestens zwei Dichtlippen und eine zweite Dichtlippe der mindestens zwei Dichtlippen, insbesondere von dem Grundkörper des radial innenliegenden Dichtelements abgewandte freie Enden der jeweiligen Dichtlippe, in montiertem Zustand in dieselbe Richtung umgelenkt und/oder umgebogen sind.

Durch das Umlenken und/oder Umbiegen wirken die Dichtlippen vorzugsweise axial abdichtend und/oder radial anliegend.

Unter "axial abdichtend" ist insbesondere zu verstehen, dass eine Leckage in axialer Richtung verhindert wird, wobei vorzugsweise die Dichtlippen radial an dem beweglichen Bauteil anliegen.

Ergänzend oder alternativ wird durch das Umlenken und/oder Umbiegen der Dichtlippen eine radiale Dichtwirkung ausgebildet.

Unter "radial abdichtend" ist insbesondere zu verstehen, dass eine Leckage in radialer Richtung verhindert wird.

Insbesondere sind die erste Dichtlippe und die zweite Dichtlippe der mindestens zwei Dichtlippen in montiertem Zustand bereichsweise oder vollständig zumindest näherungsweise parallel zueinander angeordnet.

"Zumindest näherungsweise", "im Wesentlichen" und/oder "circa" bedeutet vorzugsweise eine Abweichung von bis zu ± 20 % des Bezugswerts und/oder ± 20°, insbesondere eine Abweichung von ± 10 % des Bezugswerts und/oder ± 10°.

Beispielsweise umfassen "zumindest näherungsweise", "im Wesentlichen" und/oder "circa" Abweichungen von bis zu ± 5 % des Bezugswerts und/oder ± 5°.

Alternativ zu einer Umlenkung und/oder Umbiegung der ersten Dichtlippe und der zweiten Dichtlippe in dieselbe Richtung kann vorgesehen sein, dass die erste Dichtlippe und die zweite Dichtlippe, insbesondere von dem Grundkörper des radial innenliegenden Dichtelements abgewandte freie Enden der jeweiligen Dichtlippe, in montiertem Zustand in voneinander verschiedene Richtungen umgelenkt und/oder umgebogen sind.

Beispielsweise schließen die erste Dichtlippe und die zweite Dichtlippe in einem Querschnitt einen Winkel von ca. 70° bis ca. 150° miteinander ein.

Der Querschnitt ist vorzugsweise parallel zu einer Ebene genommen, in welcher die Längsmittelachse des beweglichen Bauteils liegt.

Das radial innenliegende Dichtelement umfasst vorzugsweise ein thermoplastisches Polymermaterial, insbesondere ein thermoplastisches Fluorpolymermaterial oder ist aus einem thermoplastischen Polymermaterial, insbesondere einem thermoplastischen Fluorpolymermaterial, gebildet.

Das thermoplastische Polymermaterial ist vorzugsweise schmelzverarbeitbar.

Es kann vorgesehen sein, dass das radial innenliegende Dichtelement aus einem reinen PTFE(Polytetrafluorethylen)-Material oder aus einem PTFE-Compoundmaterial gebildet ist. PTFE-Compoundmaterialen weisen vorzugsweise einen geringen Verschleiß und/oder eine optimierte Reibleistung auf.

Vorzugsweise umfasst das Material des radial innenliegenden Dichtelements einen oder mehrere Füllstoffe, insbesondere Pigmente, reibungsvermindernde Additive und/oder die Verschleißbeständigkeit erhöhende Additive, um die Eigenschaften des radial innenliegenden Dichtelements zu optimieren und an die jeweiligen Anforderungen anzupassen.

In Ausführungsformen, in welchen das Material des radial innenliegenden Dichtelements die Verschleißbeständigkeit erhöhende Additive umfasst, weist das Material vorzugsweise eine erhöhte Formstabilität auf.

Insbesondere ist und/oder wird das radial innenliegende Dichtelement durch spanende Bearbeitung, beispielsweise Drehen, Formen und/oder Stanzen hergestellt.

Alternativ zu den genannten Herstellungsverfahren kann das radial innenliegende Dichtelement in einem Spritzgussverfahren hergestellt sein und/oder werden. Hierdurch kann eine hohe Formbeständigkeit des Materials des radial innenliegenden Dichtelements erzielt werden.

Günstig kann es sein, wenn die Dichtungsanordnung ein Trägerelement zur Aufnahme des radial innenliegenden Dichtelements umfasst.

Das Trägerelement umfasst vorzugsweise auf und/oder an seiner radial innenliegenden Innenseite mindestens einen, insbesondere ringförmigen, Halterücksprung, in welchen mindestens ein komplementär dazu ausgebildeter, insbesondere ringförmiger, Haltevorsprung des radial innenliegenden Dichtelements eingreift.

Der mindestens eine Haltevorsprung des radial innenliegenden Dichtelements ist beispielsweise eine Materialwulst.

Vorzugsweise schnappt der mindestens eine Haltevorsprung in den mindestens einen Halterücksprung ein und/oder der mindestens eine Haltevorsprung und der mindestens eine Halterücksprung bilden eine Rastverbindung.

Der mindestens eine Haltevorsprung hintergreift den mindestens einen Halterücksprung in montiertem Zustand vorzugsweise in axialer Richtung bezüglich der Längsmittelachse des beweglichen Bauteils.

Durch den mindestens einen Haltevorsprung und den mindestens einen Halterücksprung erfolgt vorzugsweise eine, insbesondere formschlüssige und/oder kraftschlüssige, Arretierung des Trägerelements und des radial innenliegenden Dichtelements relativ zueinander.

Ergänzend oder alternativ zu der beschriebenen Variante kann vorgesehen sein, dass das Trägerelement mindestens einen Haltevorsprung aufweist, welcher in mindestens einen komplementär dazu ausgebildeten Halterücksprung des radial innenliegenden Dichtelements eingreift.

Günstig kann es sein, wenn das Trägerelement ein metallisches Material und/oder ein duroplastisches Polymermaterial und/oder ein thermoplastisches Polymermaterial umfasst oder aus einem der genannten Materialien oder aus Mischungen daraus gebildet ist.

Das Trägerelement dichtet insbesondere bei einer Montage der Dichtungsanordnung ab und/oder stabilisiert die Dichtungsanordnung während der Montage, insbesondere auch bei einer geringen Bauhöhe der Dichtungsanordnung.

Es kann vorgesehen sein, dass die Dichtungsanordnung ein oder mehrere, insbesondere ringförmige, Halteelemente umfasst, welche das radial innenliegende Dichtelement in axialer Richtung bezüglich der Längsmittelachse des beweglichen Bauteils hintergreifen und/oder in Umfangsrichtung umgreifen.

Das eine oder die mehreren Halteelemente dienen vorzugsweise einer axialen Befestigung des radial innenliegenden Dichtelements.

Günstig kann es sein, wenn das eine oder die mehreren Halteelemente formschlüssig und/oder kraftschlüssig und/oder stoffschlüssig an dem radial innenliegenden Dichtelement und/oder an dem Trägerelement festgelegt sind.

Beispielsweise sind das eine oder die mehreren Halteelemente als Presspassung ausgebildet und/oder mittels Laserschweißens und/oder Klebens an dem radial innenliegenden Dichtelement und/oder an dem Trägerelement festgelegt.

Alternativ zu einer Presspassung können eines oder mehrere des einen oder der mehreren Halteelemente als Sprengring ausgebildet sein.

Vorteilhaft kann es sein, wenn die Dichtungsanordnung ein Trägerelement zur Aufnahme des radial innenliegenden Dichtelements umfasst und wenn die Dichtungsanordnung ein radial außenliegendes Dichtelement umfasst, welches an einer radial außenliegenden Außenseite des Trägerelements festgelegt ist.

Insbesondere ist das radial außenliegende Dichtelement formschlüssig an der radial außenliegenden Außenseite des Trägerelements festgelegt.

Das radial außenliegende Dichtelement ist vorzugsweise ein Spritzgusselement.

Vorteilhaft kann es sein, wenn das radial außenliegende Dichtelement an das Trägerelement angespritzt ist und/oder wird.

Ergänzend oder alternativ kann vorgesehen sein, dass die Dichtungsanordnung einen O-Ring als radial außenliegendes Dichtelement oder als Zusatzdichtelement umfasst.

Durch das radial außenliegende Dichtelement kann eine optimierte statische Abdichtung der zwei Aufnahmeräume ausgebildet werden.

Beispielsweise beträgt eine Bauhöhe der Dichtungsanordnung, insbesondere umfassend das radial außenliegende Dichtelement, parallel zu der Längsmittelachse des beweglichen Bauteils ca. 10 mm oder weniger.

Die Bauhöhe der Dichtungsanordnung, insbesondere umfassend das radial außenliegende Dichtelement, parallel zu der Längsmittelachse des beweglichen Bauteils beträgt insbesondere ca. 5 mm oder mehr.

Das Trägerelement trennt das radial außenliegende Dichtelement vorzugsweise vollständig von dem radial innenliegenden Dichtelement. Insbesondere besteht kein direkter stofflicher Kontakt zwischen dem radial außenliegenden Dichtelement und dem radial innenliegenden Dichtelement.

Vorteilhaft kann es sein, wenn das radial außenliegende Dichtelement das Trägerelement vollständig umgreift und/oder komplett umgibt.

Ein Material des radial außenliegenden Dichtelements kann an die jeweiligen Anforderungen, insbesondere in Bezug auf Temperatur, Chemikalienbeständigkeit und/oder Reaktivität der zwei Medien, angepasst sein und/oder werden.

Insbesondere für eine verbesserte Handhabung umfasst das radial außenliegende Dichtelement insbesondere ein elastomeres Polymermaterial oder ist daraus gebildet.

Das radial außenliegende Dichtelement ist vorzugsweise zerstörungsfrei von dem Trägerelement lösbar und/oder austauschbar.

Die Dichtungsanordnung umfasst ein oder mehrere Federelemente, welche in montiertem Zustand jeweils an einer bezüglich der Längsmittelachse des beweglichen Bauteils radial außenliegenden Seite einer der mindestens zwei Dichtlippen anliegen.

Das eine oder die mehreren Federelemente umfassen vorzugsweise jeweils einen Befestigungsabschnitt und einen Federabschnitt, welche in montiertem Zustand insbesondere einen Winkel von ca. 125° bis ca. 145° miteinander einschließen.

Der Federabschnitt liegt vorzugsweise abschnittsweise oder vollständig an einer Oberflächengeometrie der jeweiligen Dichtlippe an und/oder ist zumindest näherungsweise hohlkegelstumpfförmig ausgebildet. Es kann vorgesehen sein, dass der Federabschnitt einen oder mehrere Schlitze aufweist.

Der Befestigungsabschnitt ist kreisscheibenförmig ausgebildet.

Das eine oder die mehreren Federelemente sind beispielsweise eins oder mehrere Rückstellfedern.

Durch das eine oder die mehreren Federelemente sind die mindestens zwei Dichtlippen vorzugsweise kontinuierlich und/oder auch bei einem Temperaturanstieg mit einem zumindest näherungsweise konstanten Anpressdruck an das bewegliche Bauteil angepresst.

So kann eine Dichtkraft auch bei Temperaturen von ca. 50°C oder mehr und/oder (auch) bei minus 40°C (-40°C) konstant bleiben.

Vorzugsweise ist ein Dichtverhalten und/oder Verschleiß der mindestens zwei Dichtlippen aufgrund des einen oder der mehreren Federelemente optimiert.

Das eine oder die mehreren Federelemente umfassen vorzugsweise ein metallisches Material oder sind daraus gebildet.

Alternativ kann vorgesehen sein, dass das eine oder die mehreren Federelemente ein Polymermaterial mit vergleichbaren Federeigenschaften umfassen oder aus einem Polymermaterial mit vergleichbaren mechanischen Eigenschaften gebildet sind.

Beispielsweise sind das eine oder die mehreren Federelemente aus einer Polyetheretherketon-Folie gebildet.

Es kann vorgesehen sein, dass die Dichtungsanordnung ein oder mehrere Federelemente umfasst, welche in einem montierten Zustand jeweils an einer bezüglich der Längsmittelachse des beweglichen Bauteils radial außenliegenden Seite einer der mindestens zwei Dichtlippen angeordnet und zumindest bereichsweise von dieser beabstandet sind.

Eine Federkraft des einen oder der mehreren Federelemente wirkt insbesondere radial von außen an und/oder auf einen dem Grundkörper abgewandten, insbesondere gewinkelten, Endabschnitt der jeweiligen Dichtlippe.

Durch den Endabschnitt ist und/oder wird vorzugsweise eine Vorspannung des jeweiligen Federelements an der jeweiligen Dichtlippe ausgebildet.

Vorzugsweise sind sämtliche Federelemente der Dichtungsanordnung identisch bezüglich deren Anordnung relativ zu den Dichtlippen.

Alternativ kann die Dichtungsanordnung sowohl ein oder mehrere an einer radial außenliegenden Seite einer Dichtlippe anliegende Federelemente und ein oder mehrere von einer radial außenliegenden Seite einer Dichtlippe beabstandete Federelemente umfassen.

Vorteilhaft kann es sein, wenn die Dichtungsanordnung ein oder mehrere Federelemente umfasst. Ein Verhältnis einer durchschnittlichen Dicke einer der mindestens zwei Dichtlippen und einer durchschnittlichen Dicke des einen oder der mehreren Federelemente liegt vorzugsweise in einem Bereich von ca. 2,5:1 bis ca. 20:1, insbesondere von ca. 3:1 bis ca. 7,5:1, beispielsweise von ca. 5,5:1 bis ca. 6:1. Gemäß einer bevorzugten Ausführungsform liegt das Verhältnis bei ca. 5,7:1.

Vorzugsweise weisen sämtliche Dichtlippen zumindest näherungsweise dieselbe durchschnittliche Dicke auf.

Die durchschnittliche Dicke ist vorzugsweise ein arithmetisches Mittel unterschiedlicher Dicken des jeweiligen Elements an unterschiedlichen Punkten.

Die Dicke ist vorzugsweise senkrecht zu der jeweiligen Haupterstreckungsebene definiert.

Vorzugsweise wirkt eine Federkraft des einen oder der mehreren Federelemente bezüglich der Längsmittelachse des beweglichen Bauteils, insbesondere radial, nach innen auf die jeweilige Dichtlippe.

Die jeweilige Dichtlippe ragt insbesondere in radialer Richtung weiter nach innen als das jeweilige Federelement.

Es kann vorgesehen sein, dass die Dichtungsanordnung ein oder mehrere Sekundärdichtelemente umfasst. Das eine oder die mehreren Sekundärdichtelemente sind insbesondere längs einer axialen Richtung bezüglich der Längsmittelachse des beweglichen Bauteils zwischen dem Grundkörper des radial innenliegenden Dichtelements und einem Halteelement der Dichtungsanordnung angeordnet, beispielsweise eingeklemmt.

Vorzugsweise umfasst die Dichtungsanordnung ein oder mehrere Federelemente. Ein Verhältnis eines Innendurchmessers zumindest eines des einen oder der mehreren Federelemente vor einer Montage zu einem Innendurchmesser zumindest einer der mindestens zwei Dichtlippen vor einer Montage beträgt insbesondere ca. 1:1 oder mehr und/oder ca. 1,3:1 oder weniger.

"Vor der Montage" bedeutet insbesondere vor einer Montage des einen oder der mehreren Federelemente an dem radial innenliegenden Dichtelement und/oder vor einer Montage der Dichtungsanordnung an dem beweglichen Bauteil.

Ein Unterschied zwischen einem Innendurchmesser und/oder einer Länge zumindest eines des einen oder der mehreren Federelemente und einem Innendurchmesser und/oder einer Länge zumindest einer der mindestens zwei Dichtlippen beträgt vorzugsweise höchstens ±0,5 mm, insbesondere höchstens ±0,3 mm.

Vorteilhaft kann es sein, wenn zumindest eines des einen oder der mehreren Federelemente in einem montierten Zustand der Dichtungsanordnung in radialer Richtung höchstens ca. 0,5 mm, insbesondere höchstens ca. 0,3 mm, weiter von dem beweglichen Bauteil beabstandet ist als zumindest eine der mindestens zwei Dichtlippen.

Kanten der mindestens zwei Dichtlippen und/oder des einen oder der mehreren Federelemente sind vorzugsweise in einem senkrecht zu der Längsmittelachse des beweglichen Bauteils genommenen Querschnitt zumindest näherungsweise konzentrisch mit einer radial außenliegenden Seite des beweglichen Bauteils angeordnet.

Beispielsweise beträgt der Innendurchmesser des einen oder der mehreren Federelemente jeweils ca. 2,5 mm oder mehr.

Vorzugsweise beträgt der Innendurchmesser des einen oder der mehreren Federelemente jeweils ca. ca. 5 mm oder weniger.

Der Innendurchmesser der mindestens zwei Dichtlippen beträgt vorzugsweise ca. 2,5 mm oder mehr.

Vorzugsweise beträgt der Innendurchmesser der mindestens zwei Dichtlippen jeweils ca. 5 mm oder weniger.

Das bewegliche Bauteil weist vorzugsweise einen Durchmesser von ca. 3 mm oder mehr auf.

Günstig kann es sein, wenn zumindest eine, insbesondere sämtliche, der mindestens zwei Dichtlippen in einem montierten Zustand in einem Querschnitt einen Winkel von ca. 35° bis ca. 55° mit der Längsmittelachse des beweglichen Bauteils einschließt.

Der Querschnitt ist insbesondere parallel zu einer Ebene, in welcher die Längsmittelachse des beweglichen Bauteils liegt, genommen.

Es kann vorgesehen sein, dass zumindest eine der mindestens zwei Dichtlippen spanend, insbesondere durch Drehen, hergestellt ist und dass zumindest eine davon verschiedene Dichtlippe der mindestens zwei Dichtlippen durch Formen hergestellt ist.

Durch eine Herstellung durch Drehen weist die Dichtlippe und/oder weisen die Dichtlippen vorzugsweise optimierte Eigenschaften im Hinblick auf Druckbelastungen auf. Insbesondere können gewünschte Formen, beispielsweise Rundheit und/oder Konzentrizität, der einen oder der mehreren Dichtlippen exakt und/oder prozesssicher herstellt werden.

Vorzugsweise sind eines oder mehrere der folgenden Elemente voneinander verschiedene Elemente:
- das radial außenliegende Dichtelement; und/oder
- das Trägerelement; und/oder
- das radial innenliegende Dichtelement; und/oder
- das eine oder die mehreren Halteelemente; und/oder
- das eine oder die mehreren Sekundärdichtelemente.

Die Erfindung betrifft ferner eine Pumpe für dünnflüssige Medien, beispielsweise eine Wasserpumpe, umfassend eine oder mehrere der Dichtungsanordnungen.

Eine weitere bevorzugte Pumpe für dünnflüssige Medien ist eine Kühlmediumpumpe.

Unter "dünnflüssig" sind insbesondere Flüssigkeiten mit einer Viskosität bei 25°C von ca. 50 mPa·s oder weniger, beispielsweise von ca. 30 mPa·s oder weniger, zu verstehen.

Die erfindungsgemäße Pumpe weist vorzugsweise eines oder mehrere der im Zusammenhang mit der Dichtungsanordnung beschriebenen Merkmale und/oder einen oder mehrere der im Zusammenhang mit der Dichtungsanordnung beschriebenen Vorteile auf.

Ein Verfahren zur Herstellung einer Dichtungsanordnung zur Abdichtung zwischen zwei Aufnahmeräumen zur Aufnahme zweier Medien im Bereich eines beweglichen Bauteils, insbesondere zur Herstellung einer erfindungsgemäßen Dichtungsanordnung umfasst das Herstellen und/oder Bereitstellen eines, insbesondere einstückigen, ringförmigen radial innenliegenden Dichtelements, welches mindestens zwei Dichtlippen umfasst, die sich von einem Grundkörper des radial innenliegenden Dichtelements bezüglich der Längsmittelachse des beweglichen Bauteils nach innen erstrecken.

Das Verfahren weist vorzugsweise eines oder mehrere der im Zusammenhang mit der Dichtungsanordnung beschriebenen Merkmale und/oder einen oder mehrere der im Zusammenhang mit der Dichtungsanordnung beschriebenen Vorteile auf.

Das radial innenliegende Dichtelement wird vorzugsweise an und/oder in einem Trägerelement der Dichtungsanordnung festgelegt.

Insbesondere werden ein oder mehrere, insbesondere ringförmige, Federelemente an dem radial innenliegenden Dichtelement positioniert, insbesondere derart, dass ein Befestigungsabschnitt des einen oder der mehreren Federelemente an dem Grundkörper des radial innenliegenden Dichtelements anliegt.

Günstig kann es sein, wenn das radial innenliegende Dichtelement und insbesondere das eine oder die mehreren Federelemente mittels eines oder mehrerer Halteelemente der Dichtungsanordnung axial gesichert werden.

Vorteilhaft kann es sein, wenn ein radial außenliegendes Dichtelement an das Trägerelement angespritzt wird und/oder das Trägerelement mit dem radial außenliegenden Dichtelement umspritzt wird.

Insbesondere hintergreift das radial außenliegende Dichtelement nach dessen Festlegung das Trägerelement an einem axialen Ende des Trägerelements in axialer Richtung und/oder umgreift dasselbe in axialer Richtung.

Vorzugsweise weist die Dichtungsanordnung eines oder mehrere der folgenden Merkmale und/oder einen oder mehrere der folgenden Vorteile auf:
- Ausbildung mit einer geringen radialen Bauhöhe, insbesondere bei schneller Rückstellung der mindestens zwei Dichtlippen; und/oder
- unterschiedliche Dichtungsanordnungen sind durch unterschiedliche Komponenten ausbildbar, beispielsweise durch ein Baukastensystem; und/oder
- schneller Austausch des radial innenliegenden Dichtelements und/oder des radial außenliegenden Dichtelements, insbesondere unter Weiterverwendung des Trägerelements; und/oder
- Ausbildung einer Einzeldichtlippe oder Doppeldichtlippe möglich; und/oder
- Auslegung der Dichtungsanordnung gemäß dem sogenannten Poka-Yoke-Prinzip; und/oder
- Befettung zwischen Doppeldichtlippen; und/oder
- temperaturgesteuertes Rückstellverhalten der mindestens zwei Dichtlippen; und/oder
- kein Stick-Slip-Effekt, wie beispielsweise bei Gleitringdichtungen.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Schnittdarstellung einer ersten Ausführungsform einer Dichtungsanordnung;
- Fig. 2: eine schematische Schnittdarstellung einer zweiten Ausführungsform einer Dichtungsanordnung;
- Fig. 3: eine schematische Schnittdarstellung einer dritten Ausführungsform einer Dichtungsanordnung;
- Fig. 4: eine schematische Schnittdarstellung einer vierten Ausführungsform einer Dichtungsanordnung;
- Fig. 5: eine schematische Schnittdarstellung einer fünften Ausführungsform einer Dichtungsanordnung;
- Fig. 6: eine schematische Schnittdarstellung einer sechsten Ausführungsform einer Dichtungsanordnung;
- Fig. 7: eine schematische Schnittdarstellung einer siebten Ausführungsform einer Dichtungsanordnung;
- Fig. 8: eine schematische Schnittdarstellung einer achten nicht erfindungsgemäßen Ausführungsform einer Dichtungsanordnung;
- Fig. 9: eine schematische Schnittdarstellung einer neunten nicht erfindungsgemäßen Ausführungsform einer Dichtungsanordnung; und
- Fig. 10: eine schematische Schnittdarstellung einer zehnten nicht erfindungsgemäßen Ausführungsform einer Dichtungsanordnung.

Gleiche oder funktional äquivalente Elemente sind in sämtlichen Figuren mit denselben Bezugszeichen bezeichnet.

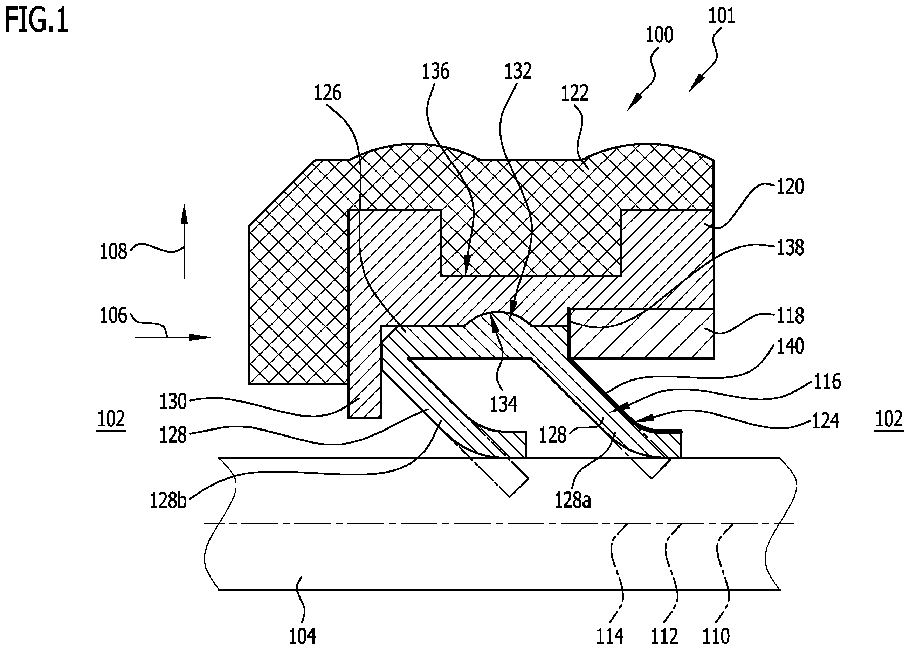

Eine in Fig. 1 dargestellte erste Ausführungsform einer als Ganzes mit 100 bezeichneten Dichtungsanordnung ist beispielsweise als eine Radialwellendichtung ausgebildet und dient zur Abdichtung zwischen zwei Aufnahmeräumen 102 zur Aufnahme zweier Medien im Bereich eines beweglichen Bauteils 104.

Die Dichtungsanordnung 100 bildet vorzugsweise einen Bestandteil einer zeichnerisch nicht als Ganzes dargestellten Pumpe 101, insbesondere einer Pumpe für dünnflüssige Medien, beispielsweise einer Wasserpumpe.

Im Folgenden wird auf eine axiale Richtung 106 und eine radiale Richtung 108 Bezug genommen. Die axiale Richtung 106 und die radiale Richtung 108 beziehen sich dabei insbesondere auf eine Längsmittelachse 110 des beweglichen Bauteils 104 und/oder eine Rotationsachse 112 des beweglichen Bauteils 104.

Die Längsmittelachse 110 und/oder die Rotationsachse 112 des beweglichen Bauteils 104 sind vorzugsweise zugleich eine Mittelachse 114 der Dichtungsanordnung 100, insbesondere eines radial innenliegenden Dichtelements 116 und/oder eines Halteelements 118 und/oder eines Trägerelements 120 und/oder eines radial außenliegenden Dichtelements 122 und/oder eines Federelements 124 der Dichtungsanordnung 100.

Die Dichtungsanordnung 100 umfasst vorzugsweise ein ringförmiges radial innenliegendes Dichtelement 116, welches in montiertem Zustand der Dichtungsanordnung 100 insbesondere an dem beweglichen Bauteil 104 anliegt, um eine Dichtfunktion der Dichtungsanordnung 100 zu ermöglichen.

Das radial innenliegende Dichtelement 116 ist beispielsweise ein radial nach innen wirkendes Dichtelement.

Vorteilhaft kann es sein, wenn das radial innenliegende Dichtelement 116 einen Grundkörper 126 umfasst, welcher insbesondere ringförmig ausgebildet ist.

Der Grundkörper 126 des radial innenliegenden Dichtelements 116 dient insbesondere einer Stabilisation und/oder Befestigung des radial innenliegenden Dichtelements 116.

Vorteilhaft kann es sein, wenn der Grundkörper 126 zumindest näherungsweise hohlzylinderförmig ausgebildet ist.

Ferner umfasst das radial innenliegende Dichtelement 116 vorzugsweise mindestens zwei, vorliegend exakt zwei, Dichtlippen 128, welche sich von dem Grundkörper 126 nach innen zu dem beweglichen Bauteil 104 hin erstrecken.

Beispielsweise ragen die Dichtlippen 128 in einen zwischen dem Grundkörper 126 und dem beweglichen Bauteil 104 angeordneten Raum hinein und/oder verbinden den Grundkörper 126 des radial innenliegenden Dichtelements 116 und das bewegliche Bauteil 104 fluiddicht.

Der Grundkörper 126 und die Dichtlippen 128 des radial innenliegenden Dichtelements 116 sind vorzugsweise ein einzelnes und/oder separat handhabbares Bauteil. Beispielsweise ist das radial innenliegende Dichtelement 116 insgesamt einstückig.

Es kann vorgesehen sein, dass das radial innenliegende Dichtelement 116 einstückig hergestellt ist.

Alternativ sind einzelne Bestandteile des radial innenliegenden Dichtelements 116 übergangslos und/oder stoffschlüssig miteinander verbunden.

Vorteilhaft kann es sein, wenn eine erste Dichtlippe 128a und eine zweite Dichtlippe 128b in einem montierten Zustand in dieselbe Richtung umgelenkt sind und/oder umgebogen sind.

Beispielsweise sind und/oder werden die erste Dichtlippe 128a und die zweite Dichtlippe 128b derart bei einer Montage gegen das bewegliche Bauteil 104 gepresst, dass ein freies Ende der ersten Dichtlippe 128a und ein freies Ende der zweiten Dichtlippe 128b umgelenkt und/oder umgebogen werden.

Haupterstreckungsrichtungen der freien Enden der Dichtlippen 128a, 128b sind in montiertem Zustand insbesondere zumindest näherungsweise parallel zu der Längsmittelachse 110 des beweglichen Bauteils 104 angeordnet.

Ein Zustand vor der Montage der Dichtungsanordnung 100 ist durch eine strichpunktierte Linie dargestellt.

Günstig kann es sein, wenn die erste Dichtlippe 128a und die zweite Dichtlippe 128b jeweils einen geraden Abschnitt aufweisen, welcher sich direkt an den Grundkörper 126 anschließt und insbesondere schräg zu einer Haupterstreckungsrichtung des Grundkörpers 126 angeordnet ist.

Beispielsweise schließen die Dichtlippen 128, insbesondere deren gerade Abschnitte, in einem Querschnitt einen Winkel von ca. 35° oder mehr mit der Längsmittelachse 110 des beweglichen Bauteils 104 ein.

Die Dichtlippen 128 des radial innenliegenden Dichtelements 116, insbesondere deren gerade Abschnitte, schließen in einem Querschnitt vorzugsweise einen Winkel von ca. 55° oder weniger mit der Längsmittelachse 110 des beweglichen Bauteils 104 ein.

Der Querschnitt ist vorzugsweise parallel zu einer Ebene genommen, welche parallel zu der Längsmittelachse 110 des beweglichen Bauteils 104 angeordnet ist.

Das radial innenliegende Dichtelement 116 ist vorzugsweise in dem Trägerelement 120 der Dichtungsanordnung 100 aufgenommen.

Das Trägerelement 120 bildet vorzugsweise ein Gehäuse.

Insbesondere dient das Trägerelement 120 einer Festlegung und/oder Stabilisation des radial innenliegenden Dichtelements 116 und/oder des radial außenliegenden Dichtelements 122.

Das Trägerelement 120 ist insbesondere ringförmig ausgebildet. Beispielsweise ist das Trägerelement 120 zumindest näherungsweise hohlzylinderförmig ausgebildet.

Vorteilhaft kann es sein, wenn das Trägerelement 120 einen Querabschnitt 130 aufweist, welcher sich von einem Grundkörper des Trägerelements 120 radial nach innen erstreckt.

Der Querabschnitt 130 des Trägerelements 120 blockiert vorzugsweise eine Verschiebung des radial innenliegenden Dichtelements 116 relativ zu dem Trägerelement 120 in axialer Richtung 106.

Zu einer Positionierung des radial innenliegenden Dichtelements 116 relativ zu dem Trägerelement 120 kann es vorteilhaft sein, wenn das radial innenliegende Dichtelement 116, insbesondere auf einer dem Trägerelement 120 zugewandten Außenseite, mindestens einen Haltevorsprung 132 aufweist.

Der mindestens eine Haltevorsprung 132 greift vorzugsweise in mindestens einen komplementär dazu ausgebildeten Halterücksprung 134 des Trägerelements 120 ein. Beispielsweise schnappt der mindestens eine Haltevorsprung 132 in den mindestens einen Halterücksprung 134 ein und/oder rastet ein.

Der mindestens eine Haltevorsprung 132 ist vorzugsweise als Materialwulst ausgebildet und/oder zumindest näherungsweise ringförmig.

Der mindestens eine Haltevorsprung 132 hintergreift das Trägerelement 120 vorzugsweise in axialer Richtung 106.

Das Trägerelement 120 umgreift das radial innenliegende Dichtelement 116 vorzugsweise von außen.

Ergänzend oder alternativ kann vorgesehen sein, dass das Trägerelement 120 mindestens einen Haltevorsprung aufweist, welcher in mindestens einen Halterücksprung des radial innenliegenden Dichtelements 116 eingreift und/oder von diesem aufgenommen ist (nicht gezeigt).

Vorteilhaft kann es sein, wenn das Trägerelement 120 ein metallisches Material umfasst oder aus einem metallischen Material gebildet ist.

Alternativ kann vorgesehen sein, dass das Trägerelement 120 aus einem duroplastischen Polymermaterial und/oder aus einem thermoplastischen Polymermaterial gebildet ist.

Gemäß einer weiteren Alternative kann vorgesehen sein, dass das Trägerelement 120 ein duroplastisches Polymermaterial und/oder ein thermoplastisches Polymermaterial umfasst.

Das radial außenliegende Dichtelement 122 dient vorzugsweise einer weiteren Abdichtung der Dichtungsanordnung 100 von außen.

Günstig kann es sein, wenn das radial außenliegende Dichtelement 122 ein elastomeres Polymermaterial umfasst oder aus einem elastomeren Polymermaterial gebildet ist.

Vorzugsweise ist und/oder wird das radial außenliegende Dichtelement 122 an einer radial außenliegenden Außenseite 136 des Trägerelements 120 an dem Trägerelement 120 festgelegt.

Beispielsweise ist und/oder wird das radial außenliegende Dichtelement 122 von außen an das Trägerelement 120 angespritzt und/oder in einem Spritzgussverfahren festgelegt.

Das radial außenliegende Dichtelement 122 umschließt das Trägerelement 120 vorzugsweise vollständig von außen.

Vorteilhaft kann es sein, wenn das Trägerelement 120 das radial außenliegende Dichtelement 122 vollständig von dem radial innenliegenden Dichtelement 116 trennt.

Das Halteelement 118 der Dichtungsanordnung 100 dient vorzugsweise einer axialen Befestigung des radial innenliegenden Dichtelements 116.

Beispielsweise ist der Grundkörper 126 des radial innenliegenden Dichtelements 116 in axialer Richtung 106 zwischen dem Querabschnitt 130 des Trägerelements 120 und dem Halteelement 118 festgelegt, beispielsweise eingeklemmt.

Das Halteelement 118 ist vorzugsweise ringförmig ausgebildet. Beispielsweise weist das Halteelement 118 zumindest näherungsweise eine hohlzylindrische Form auf.

Das Halteelement 118 ist und/oder wird vorzugsweise als Presspassung ausgebildet.

Es kann vorgesehen sein, dass das Halteelement 118 mittels Laserschweißens und/oder Klebens in der Dichtungsanordnung 100 fixiert ist.

Alternativ kann das Halteelement 118 als Sprengring ausgebildet sein.

Das Halteelement 118 umfasst vorzugsweise ein metallisches Material oder ist aus einem metallischen Material gebildet.

Erfindungsgemäß umfasst die Dichtungsanordnung ein oder mehrere, vorliegend ein, Federelemente 124, zu einem Erhalt einer Dichtlippenform und/oder Dichtwirkung.

Das Federelement 124 ist beispielsweise eine Rückstellfeder.

Das Federelement 124 umfasst einen Befestigungsabschnitt 138, welcher insbesondere zwischen einer axialen Stirnseite des Grundkörpers 126 und einer axialen Stirnseite des Halteelements 118 festgelegt, beispielsweise festgeklemmt, ist.

Der Befestigungsabschnitt 138 ist kreisscheibenförmig ausgebildet. Der Befestigungsabschnitt 138 des Federelements 124 dient insbesondere einer Festlegung des Federelements 124.

Ferner umfasst das Federelement 124 einen Federabschnitt 140, welcher insbesondere an einer radial außenliegenden Seite der ersten Dichtlippe 128a angeordnet und/oder festgelegt ist.

Der Federabschnitt 140 ist vorzugsweise relativ zu dem Befestigungsabschnitt 138 radial innenliegend und/oder ist vorzugsweise zumindest näherungsweise hohlkegelstumpfförmig. Der Federabschnitt 140 dient insbesondere einer Übertragung einer Federkraft auf die jeweilige Dichtlippe 128.

Das Federelement 124 dient insbesondere einer kontinuierlichen Anpressung der Dichtlippe 128a an das bewegliche Bauteil 104, insbesondere auch bei Temperaturen von 50°C oder mehr und/oder Temperaturen von minus 40°C (-40°C).

In montiertem Zustand sind freie Enden des Federelements 124 insbesondere entsprechend einer Form eines freien Endes der jeweiligen Dichtlippe 128 umgelenkt und/oder umgebogen.

Vorteilhaft kann es sein, wenn eine Länge und/oder Bauhöhe der Dichtungsanordnung 100 parallel zu der Längsmittelachse 110 des beweglichen Bauteils 104 ca. 5 mm oder mehr beträgt.

Die Länge und/oder Bauhöhe der Dichtungsanordnung 100 parallel zur Längsmittelachse 110 des beweglichen Bauteils 104 beträgt vorzugsweise ca. 10 mm oder weniger.

Ein Außendurchmesser der Dichtungsanordnung 100 beträgt vorzugsweise ca. 10,0 mm oder mehr.

Insbesondere beträgt der Außendurchmesser der Dichtungsanordnung 100 ca. 15,0 mm oder weniger.

In einem Zustand vor der Montage der Dichtungsanordnung 100 beträgt ein Innendurchmesser des Federelements 124 vorzugsweise ca. 2,5 mm oder mehr.

Der Innendurchmesser des Federelements 124 beträgt vor der Montage der Dichtungsanordnung 100 vorzugsweise ca. 5 mm oder weniger.

Ein Innendurchmesser des radial innenliegenden Dichtelements 116 vor der Montage der Dichtungsanordnung beträgt vorzugsweise ca. 2,5 mm oder mehr.

Der Innendurchmesser des radial innenliegenden Dichtelements 116 vor der Montage der Dichtungsanordnung 100 beträgt insbesondere ca. 5 mm oder weniger.

Ein Verhältnis der Innendurchmesser des Federelements 124 und des radial innenliegenden Dichtelements 116 vor der Montage beträgt vorzugsweise ca. 1:1 oder mehr und/oder ca. 1,3:1 oder weniger.

"Vor der Montage" bezeichnet vorzugsweise einen Zustand vor einer Montage des Federelements 124 an dem radial innenliegenden Dichtelement 116 und/oder einen Zustand vor einer Montage der Dichtungsanordnung 100 an dem beweglichen Bauteil 104.

Ein Innendurchmesser und/oder eine Länge des Federelements 124 und des radial innenliegenden Dichtelements 116 in radialer Richtung 108 unterscheiden sich vorzugsweise um höchstens ±0,5 mm, insbesondere um höchstens ±0,3 mm.

Beispielsweise ist das Federelement 124 in einem montierten Zustand der Dichtungsanordnung 100 in radialer Richtung 108 um ca. 0,5 mm oder weniger, insbesondere um ca. 0,3 mm oder weniger, weiter von dem beweglichen Bauteil 104 beabstandet als das radial innenliegende Dichtelement 116, insbesondere als die Dichtlippen 128 des radial innenliegenden Dichtelements 116.

Eine durchschnittliche Dicke der Dichtlippen 128 senkrecht zu deren Haupterstreckungsebene beträgt vorzugsweise jeweils ca. 0,3 mm oder mehr, insbesondere ca. 0,4 mm oder mehr.

Insbesondere beträgt die durchschnittliche Dicke der Dichtlippen 128 senkrecht zu deren Haupterstreckungsebene jeweils ca. 0,8 mm oder weniger, insbesondere ca. 0,5 mm oder weniger.

Eine durchschnittliche Dicke des Federelements 124 senkrecht zu dessen Haupterstreckungsebene beträgt vorzugsweise ca. 0,04 mm oder mehr, insbesondere ca. 0,06 mm oder mehr.

Die durchschnittliche Dicke des Federelements 124 senkrecht zu dessen Haupterstreckungsebene beträgt insbesondere ca. 0,12 mm oder weniger, insbesondere ca. 0,08 mm oder weniger.

Ein Verhältnis der durchschnittlichen Dicke der einzelnen Dichtlippen 128 und der durchschnittlichen Dicke des Federelements 124 beträgt vorzugsweise ca. 2,1:1 oder mehr, insbesondere ca. 3:1 oder mehr, beispielsweise ca. 5,5:1 oder mehr.

Das Verhältnis der durchschnittlichen Dicke der einzelnen Dichtlippen 128 und der durchschnittlichen Dicke des Federelements 124 beträgt vorzugsweise ca. 20:1 oder weniger, insbesondere ca. 7,5:1 oder weniger.

Vorteilhaft kann es sein, wenn das Federelement 124 ein metallisches Material umfasst oder aus einem metallischen Material gebildet ist.

Alternativ kann vorgesehen sein, dass das Federelement 124 aus einem Polymermaterial mit einer vergleichbaren Rückstellkraft und/oder vergleichbaren Federeigenschaften gebildet ist. Beispielsweise ist das Federelement 124 aus einer Polyetheretherketon-Folie.

Das radial innenliegende Dichtelement 116 umfasst vorzugsweise ein PTFE-Compoundmaterial oder ist aus einem PTFE-Compoundmaterial gebildet.

Alternativ kann vorgesehen sein, dass das radial innenliegende Dichtelement 116 reines PTFE umfasst oder aus reinem PTFE gebildet ist.

Vorteilhaft kann es sein, wenn das radial innenliegende Dichtelement 116 durch spanende Bearbeitung, beispielsweise durch Drehen, hergestellt ist und/oder wird.

So kann eine Dichtlippengeometrie vergleichsweise exakt hergestellt werden.

Insbesondere weist das radial innenliegende Dichtelement 116 so eine optimierte Druckbeständigkeit und/oder ein optimiertes Deformationsverhalten auf.

Zur Herstellung der Dichtungsanordnung 100 wird vorzugsweise das Federelement 124 an dem radial innenliegenden Dichtelement 116 angeordnet und, beispielsweise mittels Klebens, daran festgelegt.

Anschließend wird vorzugsweise das radial innenliegende Dichtelement 116 und das Federelement 124 relativ zu dem Trägerelement 120 derart positioniert, dass der Haltevorsprung 132 des radial innenliegenden Dichtelements 116 von dem Halterücksprung 134 des Trägerelements 120 aufgenommen ist.

Das Halteelement 118 ist vorzugsweise mittels Laserschweißens an dem Trägerelement 120 festgelegt.

Beispielsweise werden die genannten Elemente kraftschlüssig und/oder formschlüssig und/oder stoffschlüssig miteinander verbunden.

Zuvor, anschließend oder währenddessen wird insbesondere das Halteelement 118 derart positioniert, dass das radial innenliegende Dichtelement 116 in axialer Richtung 106 zwischen dem Querabschnitt 130 und dem Halteelement 118 festgelegt ist.

Alternativ kann vorgesehen sein, dass das Federelement 124, insbesondere dessen Befestigungsabschnitt 138, zunächst an dem Halteelement 118 festgelegt wird, bevor diese gemeinsam relativ zu dem radial innenliegenden Dichtelement 116 und dem Trägerelement 120 positioniert und/oder daran festgelegt werden.

Anschließend, zuvor oder währenddessen wird vorzugsweise das radial außenliegende Dichtelement 122 durch Anspritzen eines elastomeren Polymermaterials an das Trägerelement 120 hergestellt.

Das radial außenliegende Dichtelement 122 ist vorzugsweise zerstörungsfrei von dem Trägerelement 120 lösbar und/oder austauschbar.

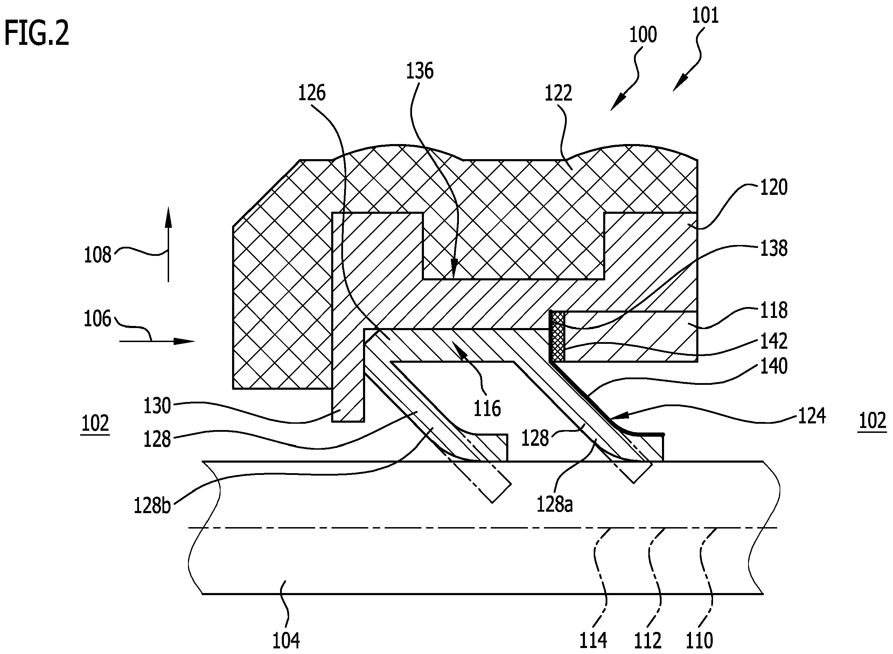

Eine in Fig. 2 dargestellte zweite Ausführungsform einer Dichtungsanordnung 100 unterscheidet sich hinsichtlich Aufbau und Funktion im Wesentlichen dadurch von der in Fig. 1 dargestellten ersten Ausführungsform, dass zwischen dem Halteelement 118 und dem Federelement 124 ein Sekundärdichtelement 142 angeordnet ist.

Das Sekundärdichtelement 142 ist vorzugsweise zumindest abschnittsweise oder vollständig kreisscheibenförmig ausgebildet, wobei insbesondere ein jeweiliger Außendurchmesser im Wesentlichen identisch mit einem Außendurchmesser des Halteelements 118 ist.

Es kann vorgesehen sein, dass kein Haltevorsprung und kein Halterücksprung zur relativen Positionierung des Trägerelements 120 und des radial innenliegenden Dichtelements 116 ausgebildet sind.

Im Übrigen stimmt die in Fig. 2 dargestellte zweite Ausführungsform einer Dichtungsanordnung 100 hinsichtlich Aufbau und Funktion im Wesentlichen mit der in Fig. 1 dargestellten ersten Ausführungsform überein, so dass auf deren Beschreibung insoweit Bezug genommen wird.

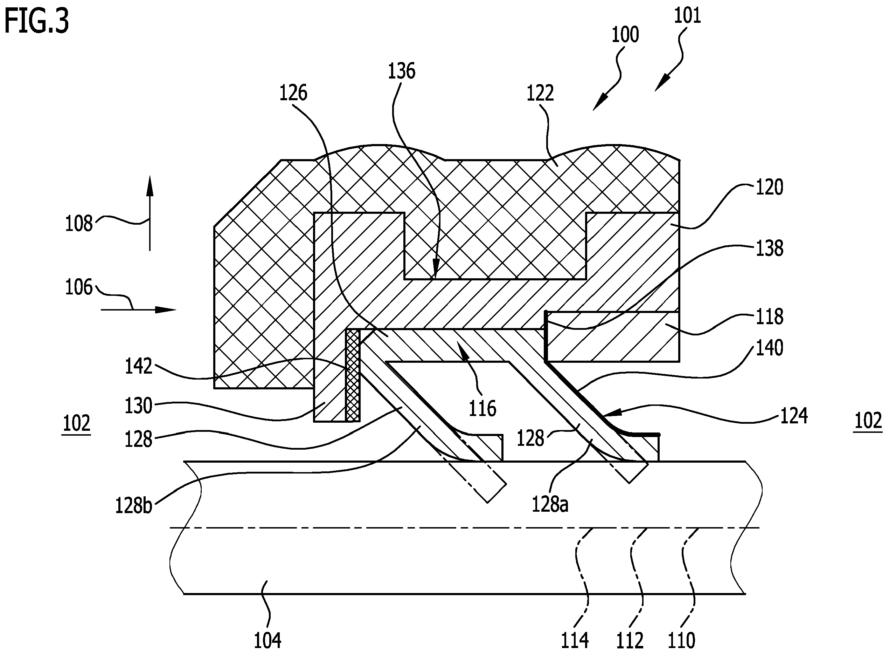

Eine in Fig. 3 dargestellte dritte Ausführungsform einer Dichtungsanordnung 100 unterscheidet sich hinsichtlich Aufbau und Funktion im Wesentlichen dadurch von der in Fig. 1 dargestellten ersten Ausführungsform, dass die Dichtungsanordnung 100 ein Sekundärdichtelement 142 umfasst, welches zwischen dem Querabschnitt 130 des Trägerelements 120 und dem radial innenliegenden Dichtelement 116 angeordnet ist.

Das Sekundärdichtelement 142 ist vorzugsweise zumindest näherungsweise kreisscheibenförmig. Ein Innendurchmesser des Sekundärdichtelements 142 und ein Innendurchmesser des Querabschnitts 130 des Trägerelements 120 sind vorzugsweise zumindest näherungsweise identisch.

Gemäß der dritten Ausführungsform der Dichtungsanordnung 100 sind Haltevorsprünge und/oder Halterücksprünge zur relativen Positionierung des Trägerelements 120 und des radial innenliegenden Dichtelements 116 entbehrlich.

Im Übrigen stimmt die in Fig. 3 dargestellte dritte Ausführungsform einer Dichtungsanordnung 100 hinsichtlich Aufbau und Funktion im Wesentlichen mit der in Fig. 1 dargestellten Ausführungsform überein, so dass auf deren Beschreibung insoweit Bezug genommen wird.

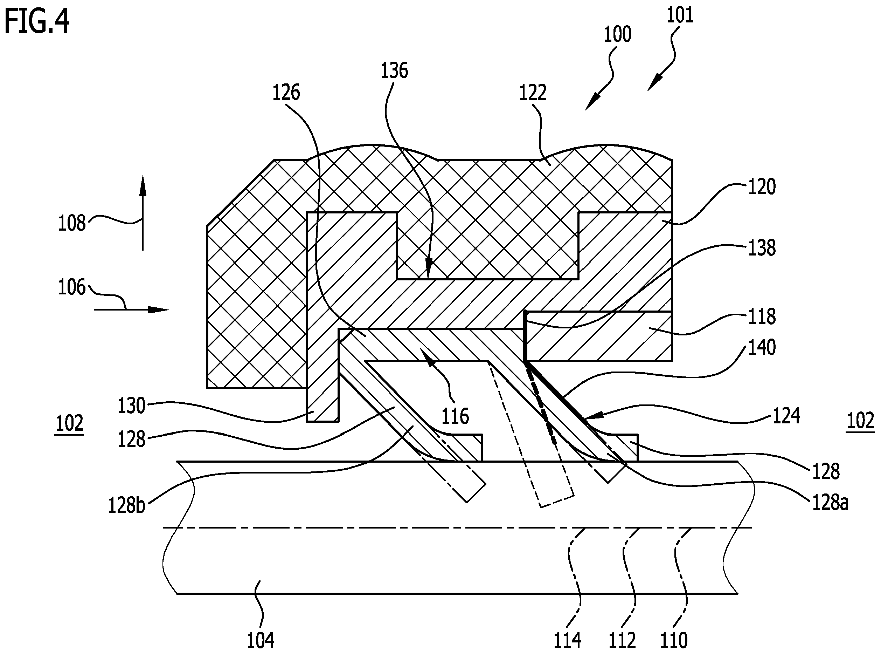

Eine in Fig. 4 dargestellte vierte Ausführungsform einer Dichtungsanordnung 100 unterscheidet sich hinsichtlich Aufbau und Funktion im Wesentlichen dadurch von der in Fig. 1 dargestellten ersten Ausführungsform, dass das Federelement 124, insbesondere dessen Federabschnitt 140, eine Länge aufweist, welche geringer ist als eine Länge der jeweiligen Dichtlippe 128.

Vorzugsweise erstreckt sich der Federabschnitt 140 über ca. 80 % oder weniger, insbesondere über ca. 70 % oder weniger, einer Länge der jeweiligen Dichtlippe 128.

Der Federabschnitt 140 erstreckt sich vorzugsweise über ca. 50 % der Länge der Dichtlippe 128 oder mehr.

Beispielsweise erstreckt sich der Federabschnitt 140 vollständig über den geraden Abschnitt der Dichtlippe 128.

Haltevorsprünge und/oder Halterücksprünge zur relativen Positionierung des Trägerelements 120 und des radial innenliegenden Dichtelements 116 sind vorzugsweise entbehrlich.

Im Übrigen stimmt die in Fig. 4 dargestellte vierte Ausführungsform einer Dichtungsanordnung 100 hinsichtlich Aufbau und Funktion im Wesentlichen mit der in Fig. 1 dargestellten ersten Ausführungsform überein, so dass auf deren Beschreibung insoweit Bezug genommen wird.

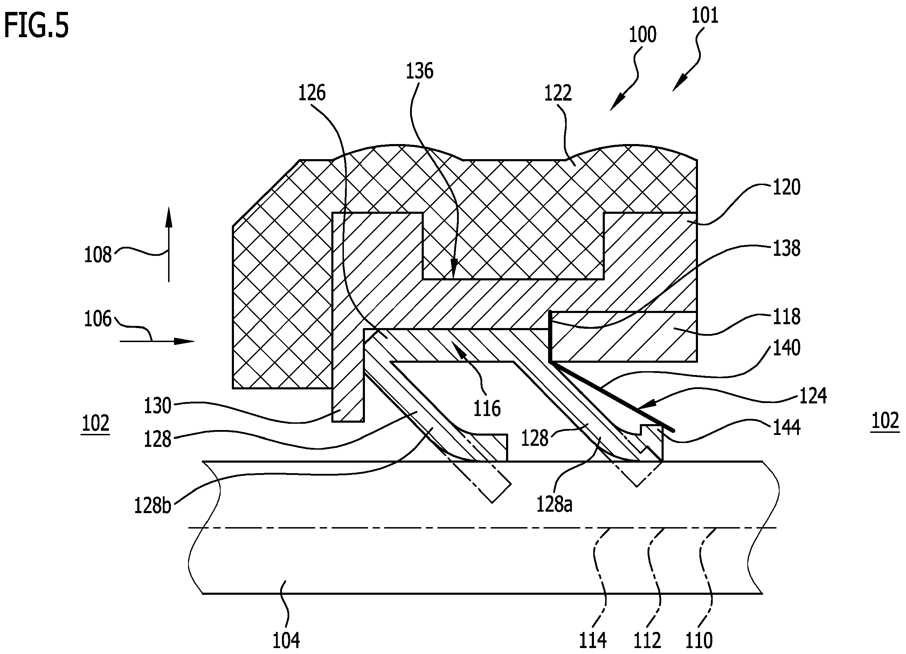

Eine in Fig. 5 dargestellte fünfte Ausführungsform einer Dichtungsanordnung 100 unterscheidet sich hinsichtlich Aufbau und Funktion im Wesentlichen dadurch von der in Fig. 1 dargestellten ersten Ausführungsform, dass das Federelement 124 im Bereich des Federabschnitts 140 von der Dichtlippe 128 teilweise beabstandet angeordnet ist.

Vorzugsweise weist die Dichtlippe 128, beispielsweise die erste Dichtlippe 128a, einen Endabschnitt 144 auf, welcher sich in montiertem Zustand vorzugsweise in Richtung des Halteelements 118 und/oder nach außen von der restlichen Dichtlippe 128 weg erstreckt.

Der Endabschnitt 144 ist beispielsweise ein gewinkelter Abschnitt der jeweiligen Dichtlippe 128.

Beispielsweise wirkt eine Federkraft des Federelements 124 an und/oder auf den Endabschnitt 144 der Dichtlippe 128.

Gemäß der fünften Ausführungsform der Dichtungsanordnung 100 sind Haltevorsprünge und/oder Halterücksprünge zur relativen Positionierung des Trägerelements 120 und des radial innenliegenden Dichtelements 116 entbehrlich.

Im Übrigen stimmt die in Fig. 5 dargestellte fünfte Ausführungsform einer Dichtungsanordnung 100 hinsichtlich Aufbau und Funktion im Wesentlichen mit der in Fig. 1 dargestellten ersten Ausführungsform überein, so dass auf deren Beschreibung insoweit Bezug genommen wird.

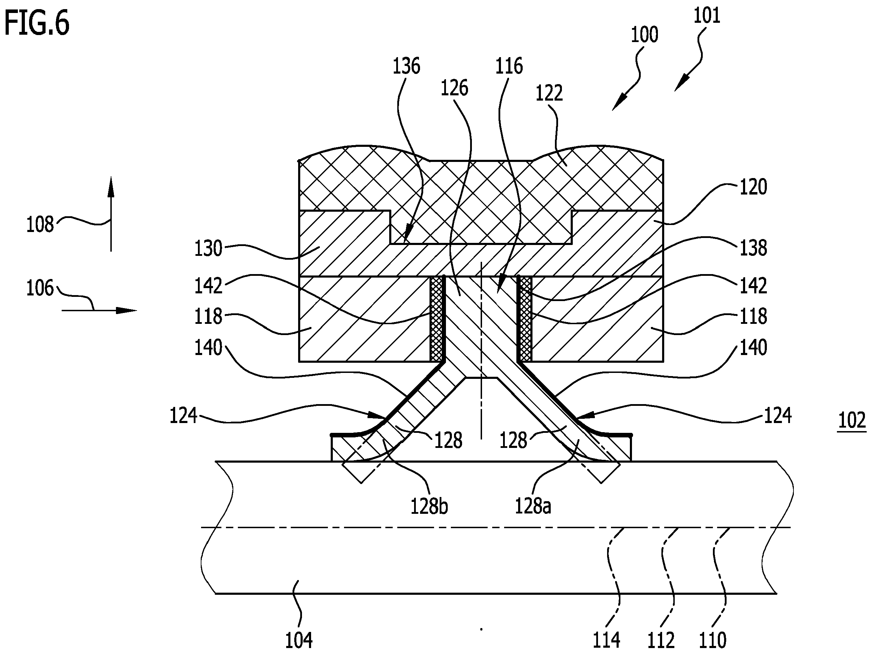

Eine in Fig. 6 dargestellte sechste Ausführungsform einer Dichtungsanordnung 100 unterscheidet sich hinsichtlich Aufbau und Funktion im Wesentlichen dadurch von der in Fig. 2 dargestellten zweiten Ausführungsform, dass die erste Dichtlippe 128a und die zweite Dichtlippe 128b in unterschiedliche Richtungen umgebogen und/oder umgelenkt sind.

Die Dichtungsanordnung 100 umfasst vorliegend zwei Halteelemente 118, welche den Grundkörper 126 des radial innenliegenden Dichtelements 116 in axialer Richtung 106 zwischen sich aufnehmen.

An einer dem Grundkörper 126 zugewandten Stirnseite des jeweiligen Halteelements ist jeweils ein Sekundärdichtelement 142 angeordnet, so dass die Dichtungsanordnung 100 vorliegend zwei Sekundärdichtelemente 142 umfasst.

Vorteilhaft kann es sein, wenn die Dichtungsanordnung 100 zwei Federelemente 124 umfasst, welche an radial außenliegenden Seiten der Dichtlippen 128 angeordnet sind.

Der Befestigungsabschnitt 138 des jeweiligen Federelements 124 ist insbesondere zwischen einem der zwei Sekundärdichtelemente 142 und dem Grundkörper 126 des radial innenliegenden Dichtelements 116 angeordnet.

Insbesondere zur verbesserten Montage umfasst das Trägerelement 120 vorliegend keinen Querabschnitt 130.

Im Übrigen stimmt die in Fig. 6 dargestellte sechste Ausführungsform einer Dichtungsanordnung 100 hinsichtlich Aufbau und Funktion im Wesentlichen mit der in Fig. 2 dargestellten zweiten Ausführungsform überein, so dass auf deren Beschreibung insoweit Bezug genommen wird.

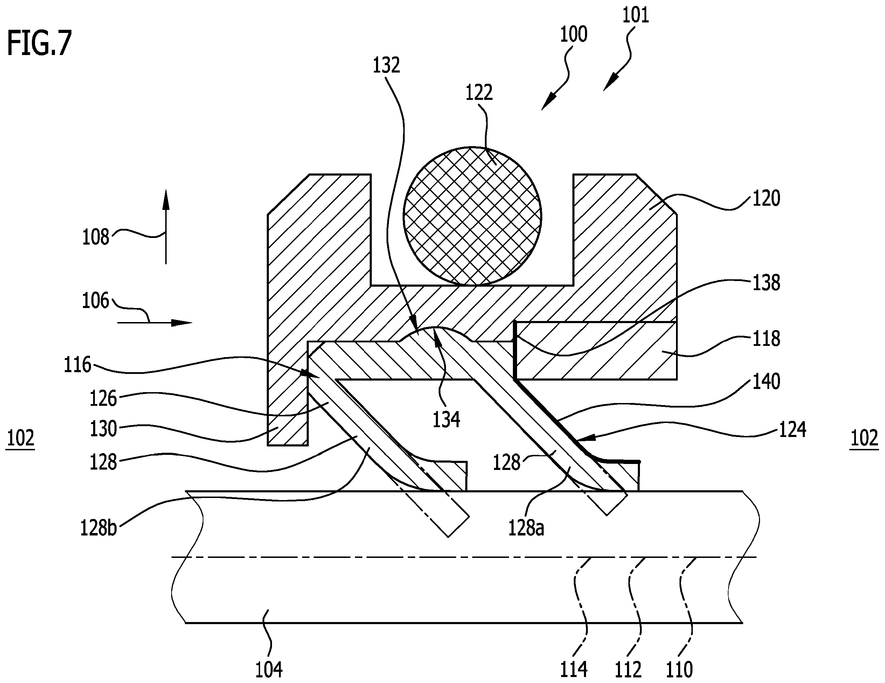

Eine in Fig. 7 dargestellte siebte Ausführungsform einer Dichtungsanordnung 100 unterscheidet sich hinsichtlich Aufbau und Funktion im Wesentlichen dadurch von der in Fig. 1 dargestellten ersten Ausführungsform, dass das radial außenliegende Dichtelement 122 in Form eines O-Rings ausgebildet ist, welcher in einer radial außenliegenden Aufnahmeausnehmung, beispielsweise einer Aufnahmenut, in dem Trägerelement 120 aufgenommen ist.

Im Übrigen stimmt die in Fig. 7 dargestellte siebte Ausführungsform einer Dichtungsanordnung 100 hinsichtlich Aufbau und Funktion im Wesentlichen mit der in Fig. 1 dargestellten ersten Ausführungsform überein, so dass auf deren Beschreibung insoweit Bezug genommen wird.

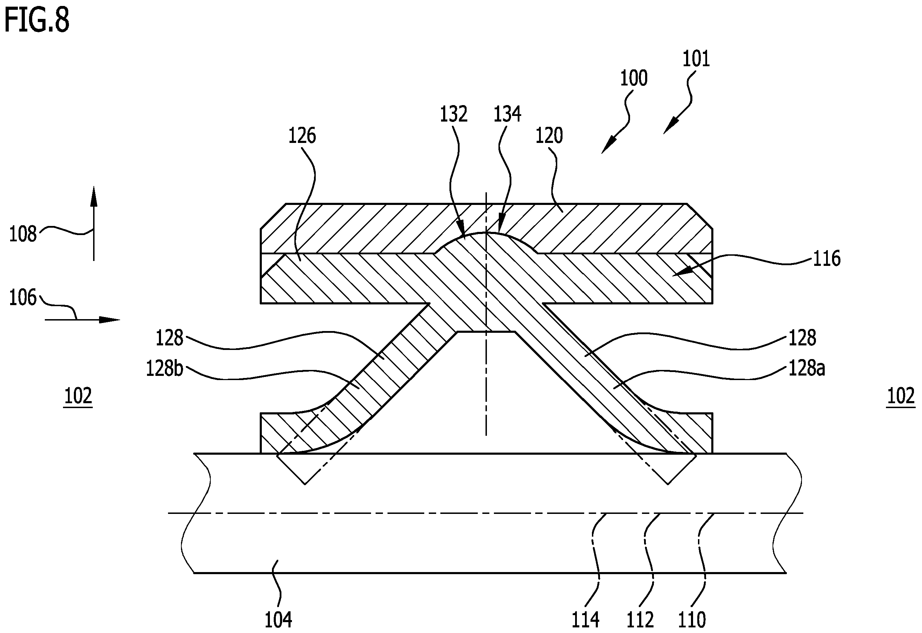

Eine in Fig. 8 dargestellte achte nicht erfindungsgemäße Ausführungsform einer Dichtungsanordnung 100 unterscheidet sich hinsichtlich Aufbau und Funktion im Wesentlichen dadurch von der in Fig. 6 dargestellten sechsten Ausführungsform, dass die Dichtungsanordnung 100 keine Federelemente 124 umfasst.

Wie im Zusammenhang mit der ersten Ausführungsform in Fig. 1 beschrieben, weist das radial innenliegende Dichtelement 116 vorzugsweise mindestens einen Haltevorsprung 132 auf, welcher in einen komplementär dazu ausgebildeten Halterücksprung 134 des Trägerelements 120 eingreift.

Günstig kann es sein, wenn die Dichtungsanordnung 100 kein radial außenliegendes Dichtelement 122 umfasst und/oder wenn die Dichtungsanordnung 100 kein Halteelement 118 umfasst.

Sekundärdichtelemente 142 sind vorzugsweise entbehrlich.

Das Trägerelement 120 ist vorzugsweise mit Ausnahme des Halterücksprungs 134 vollständig hohlzylinderförmig ausgebildet.

Im Übrigen stimmt die in Fig. 8 dargestellte achte Ausführungsform einer Dichtungsanordnung 100 hinsichtlich Aufbau und Funktion im Wesentlichen mit der in Fig. 6 dargestellten sechsten Ausführungsform überein, so dass auf deren Beschreibung insoweit Bezug genommen wird.

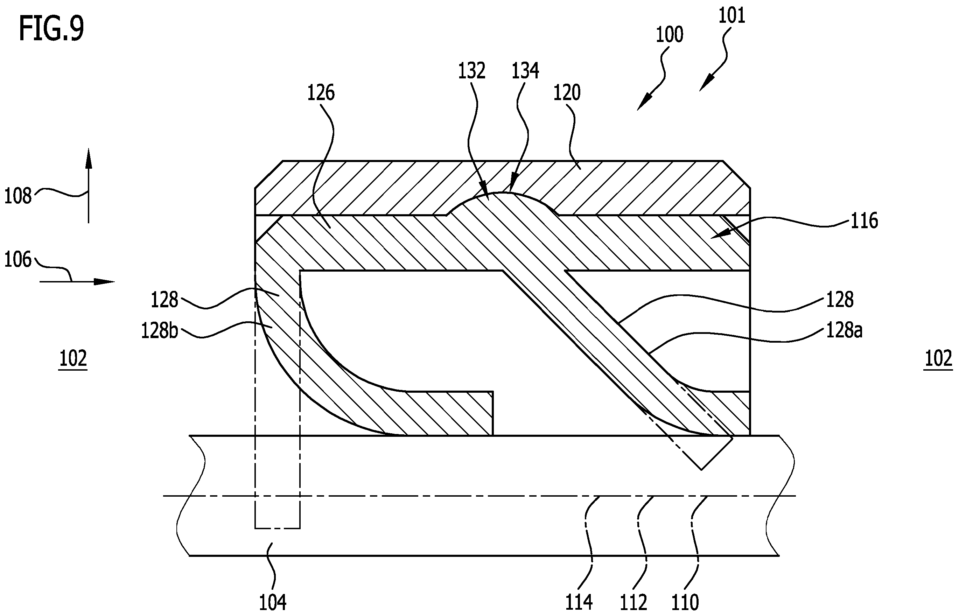

Eine in Fig. 9 dargestellte neunte nicht erfindungsgemäße Ausführungsform einer Dichtungsanordnung 100 unterscheidet sich hinsichtlich Aufbau und Funktion im Wesentlichen dadurch von der in Fig. 8 dargestellten achten Ausführungsform, dass die erste Dichtlippe 128a und die zweite Dichtlippe 128b in dieselbe Richtung umgelenkt und/oder umgebogen sind und/oder werden.

Vorteilhaft kann es sein, wenn die erste Dichtlippe 128a durch spanende Bearbeitung, beispielsweise durch Drehen, hergestellt ist und die zweite Dichtlippe 128b durch Formen hergestellt ist.

Die durch Formen hergestellte Dichtlippe 128 weist vorzugsweise keinen geraden Abschnitt auf und/oder ist über die gesamte Länge gewölbt ausgebildet.

Im Übrigen stimmt die in Fig. 9 dargestellte neunte Ausführungsform einer Dichtungsanordnung 100 hinsichtlich Aufbau und Funktion im Wesentlichen mit der in Fig. 8 dargestellten achten Ausführungsform überein, so dass auf deren Beschreibung insoweit Bezug genommen wird.

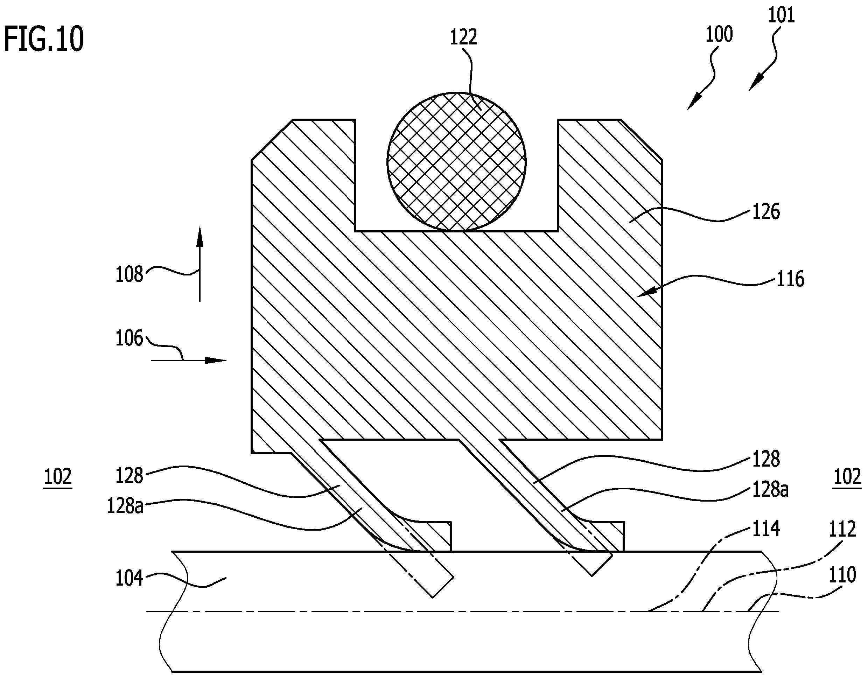

Eine in Fig. 10 dargestellte zehnte nicht erfindungsgemäße Ausführungsform einer Dichtungsanordnung 100 unterscheidet sich hinsichtlich Aufbau und Funktion im Wesentlichen dadurch von der in Fig. 9 dargestellten neunten Ausführungsform, dass die Dichtungsanordnung 100 kein Trägerelement 120 umfasst.

Ein radial außenliegendes Dichtelement 122 ist vorliegend in Form eines O-Rings ausgebildet, welcher in eine dafür vorgesehenen Aufnahmeausnehmung, beispielsweise eine Aufnahmenut, auf einer radial außenliegenden Außenseite des radial innenliegenden Dichtelements 116 aufgenommen ist.

Günstig kann es sein, wenn sowohl die erste Dichtlippe 128a als auch die zweite Dichtlippe 128b durch spanende Bearbeitung, beispielsweise durch Drehen, hergestellt sind und/oder werden.

Im Übrigen stimmt die in Fig. 10 dargestellte zehnte Ausführungsform einer Dichtungsanordnung 100 hinsichtlich Aufbau und Funktion im Wesentlichen mit der in Fig. 9 dargestellten neunten Ausführungsform überein, so dass auf deren Beschreibung insoweit Bezug genommen wird.

## Patentansprüche

1. Pumpe (101), insbesondere eine Pumpe für dünnflüssige Medien, umfassend eine Dichtungsanordnung (100) zur Abdichtung zwischen zwei Aufnahmeräumen (102) zur Aufnahme zweier Medien im Bereich eines beweglichen Bauteils (104), wobei die Dichtungsanordnung (100) ein ringförmiges radial innenliegendes Dichtelement (116) umfasst, welches in einem montierten Zustand zur Abdichtung an dem beweglichen Bauteil (104) anliegt oder daran anlegbar ist, **dadurch gekennzeichnet, dass** das radial innenliegende Dichtelement (116) einstückig ausgebildet ist und mindestens zwei Dichtlippen (128) umfasst, welche sich von einem Grundkörper (126) des radial innenliegenden Dichtelements (116) bezüglich einer Längsmittelachse (110) des beweglichen Bauteils (104) nach innen erstrecken, wobei die Dichtungsanordnung (100) ein oder mehrere Federelemente (124) umfasst, welche in montiertem Zustand jeweils an einer bezüglich der Längsmittelachse (110) des beweglichen Bauteils (104) radial außenliegenden Seite einer der mindestens zwei Dichtlippen (128) anliegen, wobei das eine oder die mehreren Federelemente (124) jeweils einen Befestigungsabschnitt (138) und einen Federabschnitt (140) umfassen, wobei der Befestigungsabschnitt (138) kreisscheibenförmig ist.

2. Pumpe (101) nach Anspruch 1, **dadurch gekennzeichnet, dass** die Dichtungsanordnung (100) ein Trägerelement (120) zur Aufnahme des radial innenliegenden Dichtelements (116) umfasst, wobei das Trägerelement (120) insbesondere auf seiner radial innenliegenden Innenseite mindestens einen, insbesondere ringförmigen, Halterücksprung (134) aufweist, in welchen mindestens ein komplementär dazu ausgebildeter, insbesondere ringförmiger, Haltevorsprung (132) des radial innenliegenden Dichtelements (116) eingreift.

3. Pumpe (101) nach einem der Ansprüche 1 oder 2, **dadurch gekennzeichnet, dass** die Dichtungsanordnung (100) ein oder mehrere, insbesondere ringförmige, Halteelemente (118) umfasst, welche das radial innenliegende Dichtelement (116) in axialer Richtung (106) hintergreifen.

4. Pumpe (101) nach einem der Ansprüche 1 bis 3, **dadurch gekennzeichnet, dass** die Dichtungsanordnung (100) ein Trägerelement (120) zur Aufnahme des radial innenliegenden Dichtelements (116) umfasst und dass die Dichtungsanordnung (100) ein radial außenliegendes Dichtelement (122) umfasst, welches an einer radial außenliegenden Außenseite (136) des Trägerelements (120), insbesondere formschlüssig, festgelegt ist, wobei das radial außenliegende Dichtelement (122) insbesondere ein Spritzgusselement ist.

5. Pumpe (101) nach Anspruch 4, **dadurch gekennzeichnet, dass** das radial außenliegende Dichtelement (122) ein elastomeres Polymermaterial umfasst oder daraus gebildet ist.

6. Pumpe (101) nach einem der Ansprüche 1 bis 5, **dadurch gekennzeichnet, dass** der Befestigungsabschnitt (138) und der Federabschnitt (140) in montiertem Zustand einen Winkel von ca. 125° bis ca. 145° miteinander einschließen.

7. Pumpe (101) nach einem der Ansprüche 1 bis 6, **dadurch gekennzeichnet, dass** die Dichtungsanordnung (100) ein oder mehrere Federelemente (124) umfasst, welche in einem montierten jeweils Zustand an einer bezüglich der Längsmittelachse (110) des beweglichen Bauteils (104) radial außenliegenden Seite einer der mindestens zwei Dichtlippen (128) angeordnet und von dieser beabstandet sind, wobei eine Federkraft des einen oder der mehreren Federelemente (124) radial von außen auf einen dem Grundkörper (126) abgewandten, insbesondere gewinkelten, Endabschnitt (144) der jeweiligen Dichtlippe (128) wirkt.

8. Pumpe (101) nach einem der Ansprüche 1 bis 7, **dadurch gekennzeichnet, dass** die Dichtungsanordnung (100) ein oder mehrere Federelemente (124) umfasst, wobei ein Verhältnis einer durchschnittlichen Dicke zumindest einer der mindestens zwei Dichtlippen (128) und einer durchschnittlichen Dicke zumindest eines des einen oder der mehreren Federelemente (124) jeweils in einem Bereich von ca. 2,5:1 bis ca. 20:1, insbesondere von ca. 5,5:1 bis ca. 7,5:1, liegt.

9. Pumpe (101) nach einem der Ansprüche 1 bis 8, **dadurch gekennzeichnet, dass** die Dichtungsanordnung (100) ein oder mehrere Sekundärdichtelemente (142) umfasst, wobei das eine oder die mehreren Sekundärdichtelemente (142) insbesondere längs einer axialen Richtung (106) bezüglich der Längsmittelachse (110) des beweglichen Bauteils (104) zwischen dem Grundkörper (126) des radial innenliegenden Dichtelements (116) und einem Halteelement (118) der Dichtungsanordnung (100) angeordnet, insbesondere eingeklemmt, sind.

10. Pumpe (101) nach einem der Ansprüche 1 bis 9, **dadurch gekennzeichnet, dass** die Dichtungsanordnung (100) ein oder mehrere Federelemente (124) umfasst, wobei ein Verhältnis eines Innendurchmessers zumindest eines des einen oder der mehreren Federelemente (124) vor einer Montage zu einem Innendurchmesser zumindest einer der mindestens zwei Dichtlippen (128) vor einer Montage in einem Bereich von ca. 1:1 bis ca. 1,3:1 liegt.

11. Pumpe (101) nach einem der Ansprüche 1 bis 10, **dadurch gekennzeichnet, dass** zumindest eine der mindestens zwei Dichtlippen (128) spanend, insbesondere durch Drehen, hergestellt ist und dass zumindest eine davon verschiedene Dichtlippe (128) der mindestens zwei Dichtlippen (128) durch Formen hergestellt ist.

12. Pumpe (101) nach einem der Ansprüche 1 bis 11, **dadurch gekennzeichnet, dass** die Pumpe (101) mehrere in den Ansprüchen 1 bis 11 definierte Dichtungsanordnungen (100) umfasst.

13. Pumpe (101) nach einem der Ansprüche 1 bis 12, **dadurch gekennzeichnet, dass** die Pumpe (101) eine Wasserpumpe und/oder eine Kühlmediumpumpe ist.

14. Pumpe (101) nach einem der Ansprüche 1 bis 13, **dadurch gekennzeichnet, dass** die Dichtungsanordnung (100) eine Radialwellendichtung bildet.

15. Fahrzeug, worin sich eine Pumpe (101) gemäß einem der Ansprüche 1 bis 14 befindet, wobei die Dichtungsanordnung (100) eine Radialwellendichtung für die Pumpe (101) bildet.

## Claims

1. Pump (101), in particular a pump for low-viscosity media, comprising a sealing arrangement (100) for sealing between two receiving spaces (102) for receiving two media in the region of a movable component (104), wherein the sealing arrangement (100) comprises an annular radially internal sealing element (116) which, in a mounted state, bears or can bear against the movable component (104) for sealing, **characterized in that** the radially internal sealing element (116) is formed in one piece and comprises at least two sealing lips (128) which extend inwards from a main body (126) of the radially internal sealing element (116) with regard to a longitudinal centre axis (110) of the movable component (104), wherein the sealing arrangement (100) comprises one or more spring elements (124) which, in a mounted state, each bear against a radially external side of one of the at least two sealing lips (128) with respect to the longitudinal centre axis (110) of the movable component (104), wherein the one or more spring elements (124) each comprise a fastening portion (138) and a spring portion (140), wherein the fastening portion (138) is circular disc-shaped.

2. Pump (101) according to Claim 1, **characterized in that** the sealing arrangement (100) comprises a carrier element (120) for receiving the radially internal sealing element (116), wherein the carrier element (120) has, in particular on its radially internal inner side, at least one, in particular annular, retaining recess (134), into which at least one complementary, in particular annular, retaining projection (132) of the radially internal sealing element (116) engages.

3. Pump (101) according to either of Claims 1 or 2, **characterized in that** the sealing arrangement (100) comprises one or more, in particular annular, retaining elements (118) which engage behind the radially internal sealing element (116) in the axial direction (106).

4. Pump (101) according to one of Claims 1 to 3, **characterized in that** the sealing arrangement (100) comprises a carrier element (120) for receiving the radially internal sealing element (116), and **in that** the sealing arrangement (100) comprises a radially external sealing element (122) which is fixed on a radially external outer side (136) of the carrier element (120), in particular in a positively locking manner, wherein the radially external sealing element (122) is, in particular, an injection-moulded element.

5. Pump (101) according to Claim 4, **characterized in that** the radially external sealing element (122) comprises an elastomeric polymer material or is formed from it.

6. Pump (101) according to one of Claims 1 to 5, **characterized in that**, in a mounted state, the fastening portion (138) and the spring portion (140) enclose an angle of from approximately 125° to approximately 145° with each other.

7. Pump (101) according to one of Claims 1 to 6, **characterized in that** the sealing arrangement (100) comprises one or more spring elements (124) which, in a respective mounted state, are arranged and spaced from one of the at least two sealing lips (128) on a radially external side with regard to the longitudinal centre axis (110) of the movable component (104), wherein a spring force of the one or more spring elements (124) acts radially from the outside on an end portion (144), facing, in particular angled, away from the main body (126), of the respective sealing lip (128).

8. Pump (101) according to one of Claims 1 to 7, **characterized in that** the sealing arrangement (100) comprises one or more spring elements (124), wherein a ratio of an average thickness of at least one of the at least two sealing lips (128) and an average thickness of at least one of the one or more spring elements (124) is in each case in a range of from approximately 2.5:1 to approximately 20:1, in particular from approximately 5.5:1 to approximately 7.5:1.

9. Pump (101) according to one of Claims 1 to 8, **characterized in that** the sealing arrangement (100) comprises one or more secondary sealing elements (142), wherein the one or more secondary sealing elements (142) are arranged, in particular clamped in, between the main body (126) of the radially internal sealing element (116) and a retaining element (118) of the sealing arrangement (100), in particular along an axial direction (106) with regard to the longitudinal centre axis (110) of the movable component (104).

10. Pump (101) according to one of Claims 1 to 9, **characterized in that** the sealing arrangement (100) comprises one or more spring elements (124), wherein a ratio of an inner diameter of at least one of the one or more spring elements (124) before mounting to an inner diameter of at least one of the at least two sealing lips (128) before mounting lies in a range of from approximately 1:1 to approximately 1.3:1.

11. Pump (101) according to one of Claims 1 to 10, **characterized in that** at least one of the at least two sealing lips (128) is machined, in particular by turning, and **in that** at least one sealing lip (128), different therefrom, of the at least two sealing lips (128) is produced by moulding.

12. Pump (101) according to one of Claims 1 to 11, **characterized in that** the pump (101) comprises a plurality of sealing arrangements (100) defined in Claims 1 to 11.

13. Pump (101) according to one of Claims 1 to 12, **characterized in that** the pump (101) is a water pump and/or a cooling-medium pump.

14. Pump (101) according to one of Claims 1 to 13, **characterized in that** the sealing arrangement (100) forms a radial shaft seal.

15. Vehicle, in which a pump (101) according to one of Claims 1 to 14 is located, wherein the sealing arrangement (100) forms a radial shaft seal for the pump (101).

## Revendications

1. Pompe (101), en particulier pompe pour des milieux fluides, comprenant un ensemble d'étanchéité (100) destiné à étanchéifier entre deux espaces de réception (102) destinés à recevoir deux milieux dans la zone d'un composant (104) mobile, l'ensemble d'étanchéité (100) comprenant un élément d'étanchéité (116) situé radialement à l'intérieur de forme annulaire, lequel repose sur le composant (104) mobile pour l'étanchéification dans un état monté ou peut être placé dessus, **caractérisée en ce que** l'élément d'étanchéité (116) situé radialement à l'intérieur est réalisé d'un seul tenant et comprend au moins deux lèvres d'étanchéité (128), lesquelles s'étendent vers l'intérieur depuis un corps de base (126) de l'élément d'étanchéité (116) situé radialement à l'intérieur par rapport à un axe médian longitudinal (110) du composant (104) mobile, l'ensemble d'étanchéité (100) comprenant un ou plusieurs éléments de ressort (124), qui reposent, dans l'état monté, chacun sur un côté, situé radialement à l'extérieur par rapport à l'axe médian longitudinal (110) du composant mobile (104), d'une des au moins deux lèvres d'étanchéité (128), l'un ou les plusieurs éléments de ressort (124) comprenant chacun une section de fixation (138) et une section de ressort (140), la section de fixation (138) ayant une forme de disque circulaire.

2. Pompe (101) selon la revendication 1, **caractérisée en ce que** l'ensemble d'étanchéité (100) comprend un élément de support (120) destiné à recevoir l'élément d'étanchéité (116) situé radialement à l'intérieur, l'élément de support (120) comportant en particulier sur son côté intérieur situé radialement à l'intérieur au moins un retrait de maintien (134), en particulier de forme annulaire, avec lequel au moins une partie faisant saillie de maintien (132), réalisée de manière complémentaire à celui-ci, en particulier de forme annulaire, de l'élément d'étanchéité (116) situé radialement à l'intérieur vient en prise.

3. Pompe (101) selon l'une des revendications 1 ou 2, **caractérisée en ce que** l'ensemble d'étanchéité (100) comprend un ou plusieurs éléments de maintien (118), en particulier de forme annulaire, lesquels viennent en prise par l'arrière avec l'élément d'étanchéité (116) situé à l'intérieur radialement dans la direction axiale (106).

4. Pompe (101) selon l'une des revendications 1 à 3, **caractérisée en ce que** l'ensemble d'étanchéité (100) comprend un élément de support (120) destiné à recevoir l'élément d'étanchéité (116) situé radialement à l'intérieur, et que l'ensemble d'étanchéité (100) comprend un élément d'étanchéité (122) situé radialement à l'extérieur, lequel est immobilisé, en particulier par complémentarité de forme, sur un côté extérieur (136) situé radialement à l'extérieur de l'élément de support (120), l'élément d'étanchéité (122) situé radialement à l'extérieur étant en particulier un élément de moulage par injection.

5. Pompe (101) selon la revendication 4, **caractérisée en ce que** l'élément d'étanchéité (122) situé radialement à l'extérieur comprend un matériau polymère élastomère ou est formé à partir de celui-ci.

6. Pompe (101) selon l'une des revendications 1 à 5, **caractérisée en ce que** la section de fixation (138) et la section de ressort (140) forment l'une avec l'autre dans l'état monté un angle d'environ 125° à environ 145°.

7. Pompe (101) selon l'une des revendications 1 à 6, **caractérisée en ce que** l'ensemble d'étanchéité (100) comprend un ou plusieurs éléments de ressort (124), lesquels sont disposés, dans un état respectivement monté, sur un côté, situé radialement à l'extérieur par rapport à l'axe médian longitudinal (110) du composant mobile (104), d'une des au moins deux lèvres d'étanchéité (128) et sont espacés de celle-ci, une force de ressort de l'un ou des plusieurs éléments de ressort (124) agissant radialement depuis l'extérieur sur une section d'extrémité (144), opposée au corps de base (126), en particulier coudée, de la lèvre d'étanchéité (128) respective.

8. Pompe (101) selon l'une des revendications 1 à 7, **caractérisée en ce que** l'ensemble d'étanchéité (100) comprend un ou plusieurs éléments de ressort (124), un rapport d'une épaisseur moyenne d'au moins une des au moins deux lèvres d'étanchéité (128) et d'une épaisseur moyenne d'au moins un de l'un ou des plusieurs éléments de ressort (124) se situant respectivement dans une plage d'environ 2,5:1 à environ 20:1, en particulier d'environ 5,5:1 à environ 7,5:1.

9. Pompe (101) selon l'une des revendications 1 à 8, **caractérisée en ce que** l'ensemble d'étanchéité (100) comprend un ou plusieurs éléments d'étanchéité secondaires (142), l'un ou les plusieurs éléments d'étanchéité secondaires (142) étant disposés, en particulier coincés, en particulier le long d'une direction axiale (106) par rapport à l'axe médian longitudinal (110) du composant mobile (104) entre le corps de base (126) de l'élément d'étanchéité (116) situé radialement à l'intérieur et un élément de maintien (118) de l'ensemble d'étanchéité (100).

10. Pompe (101) selon l'une des revendications 1 à 9, **caractérisée en ce que** l'ensemble d'étanchéité (100) comprend un ou plusieurs éléments de ressort (124), un rapport d'un diamètre intérieur d'au moins un de l'un ou des plusieurs éléments de ressort (124) avant un montage par rapport à un diamètre intérieur d'au moins une des au moins deux lèvres d'étanchéité (128) avant un montage se situant dans une plage d'environ 1:1 à environ 1,3:1.

11. Pompe (101) selon l'une des revendications 1 à 10, **caractérisée en ce qu'**au moins une des au moins deux lèvres d'étanchéité (128) est fabriquée par enlèvement de copeaux, en particulier par rotation, et qu'au moins une lèvre d'étanchéité (128) différente de celle-ci des au moins deux lèvres d'étanchéité (128) est fabriquée par moulage.

12. Pompe (101) selon l'une des revendications 1 à 11, **caractérisée en ce que** la pompe (101) comprend plusieurs ensembles d'étanchéité (100) définis dans les revendications 1 à 11.

13. Pompe (101) selon l'une des revendications 1 à 12, **caractérisée en ce que** la pompe (101) est une pompe à eau et/ou une pompe à milieu de refroidissement.

14. Pompe (101) selon l'une des revendications 1 à 13, **caractérisée en ce que** l'ensemble d'étanchéité (100) forme un joint d'étanchéité d'arbre radial.

15. Véhicule, dans lequel se trouve une pompe (101) selon l'une des revendications 1 à 14, l'ensemble d'étanchéité (100) formant un joint d'étanchéité d'arbre radial pour la pompe (101).
